Europäisches Patentamt

European Patent Office

Office européen des brevets

(11) Veröffentlichungsnummer: **0 217 464 B1**

(12) **EUROPÄISCHE PATENTSCHRIFT**

(45) Veröffentlichungstag der Patentschrift: **18.12.91**

(51) Int. Cl.⁵: **G01N 23/20**, G01N 23/06

(21) Anmeldenummer: **86201647.4**

(22) Anmeldetag: **23.09.86**

(54) Verfahren zur Bestimmung der Fotoschwächung in einem Bereich eines Untersuchungskörpers und Anordnung zur Durchführung des Verfahrens.

(30) Priorität: **28.09.85 DE 3534702**

(43) Veröffentlichungstag der Anmeldung:
**08.04.87 Patentblatt 87/15**

(45) Bekanntmachung des Hinweises auf die
Patenterteilung:
**18.12.91 Patentblatt 91/51**

(84) Benannte Vertragsstaaten:
**DE FR GB**

(56) Entgegenhaltungen:
**DE-A- 2 544 354**
**DE-A- 2 655 230**
**GB-A- 2 083 969**
**US-A- 3 769 507**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Harding, Geoffrey Dr.
Poststrasse 18
W-2083 Halstenbek(DE)**
Erfinder: **Kosanetzky, Josef-Maria, Dr.
Langenharmer Ring 120
W-2000 Norderstedt 1(DE)**

(74) Vertreter: **Hartmann, Heinrich, Dipl.-Ing. et al
Philips Patentverwaltung GmbH Wendenstrasse 35 Postfach 10 51 49
W-2000 Hamburg 1(DE)**

## Beschreibung

Die Erfindung betrifft ein Verfahren zur Bestimmung der Fotoschwächung in einem von einem Primärstrahl durchsetzten Bereich eines Untersuchungskörpers, wobei die im Primärstrahlbereich erzeugte Streustrahlung gemessen und aus den Meßwerten die Fotoschwächung bestimmt wird, sowie eine Anordnung zur Durchführung des Verfahrens.

Ein solches Verfahren, das grundsätzlich in der medizinischen Diagnostik oder in der Materialprüfung (einschließlich Lebensmittelprüfung) einsetzbar ist, ist aus J. Phys. E: Sci. Instrum., Vol. 18, 1985, Seiten 354 bis 357 bekannt. Bei diesem als "Ratio-Methode" bezeichneten Verfahren wird der Untersuchungskörper von einem Primärstrahl durchstrahlt und die in dem interessierenden Bereich des Primärstrahls im Untersuchungskörper erzeugte und unter einem Winkel von $90°$ austretende Streustrahlung wird gemessen, und zwar nach Comptonanteil und elastischem Streustrahlenanteil getrennt. Aus dem Verhältnis von elastischem Streustrahlenanteil zu Comptonanteil kann auf die Fotoschwächung in dem erwähnten Bereich des Primärstrahls geschlossen werden.

Die getrennte Erfassung von Compoton-Streustrahlung und elastischer Streustrahlung nutzt die Tatsache aus, daß bei einem Compton-Streuvorgang die Energie eines Röntgenquants abnimmt, während bei der elastischen Streuung (sogenannte Rayleigh-Streuung) das gestreute Röntenquant keine Energieänderung erfährt. Um Compton-Streustrahlung und elastische Streustrahlung voneinander trennen zu können, muß die Amplitude der beim Eintreffen von Röntgenquanten erzeugten Impulse, die der Energie der Röntgenquanten proportional ist, mittels eines Impulshöhenanalysators bestimmt und ausgewertet werden, und damit dies überhaupt möglich ist, muß monochromatische Röntgenstrahlung verwendet werden. Strahlenquellen für monochromatische Röntgenstrahlung sind aber wesentlich intensitätsärmer als Strahlenquellen für polychromatische Röntgenstrahlung. Es kommt hinzu, daß der Streuwinkel, den die bei der Messung erfaßte Streustrahlung mit dem Primärstrahl einschließt, relativ groß sein muß - z.B. $90°$ - , damit der Energieunterschied der elastischen Streustrahlung und der Comptonstrahlung ausgewertet werden kann. Bei derart großen Streuwinkeln ist die Intensität der elastisch gestreuten Strahlung jedoch sehr gering, weil elastisch gestreute Strahlung in Vorwärtsrichtung konzentrisch ist, wenn die Strahlenergie ausreichend hoch ist ( 60 keV), um typische Objekte zu durchdringen. Aus den genannten Gründen sind außerordentlich lange Meßzeiten erforderlich, um genügend genaue Resultate zu erreichen.

Aufgabe der Erfindung ist es, ein Verfahren anzugeben, das ohne die getrennte Erfassung der elastisch gestreuten Strahlung auskommt.

Ausgehend von einem Verfahren der eingangs genannten Art wird diese Aufgabe dadurch gelöst, daß mit zwei Detektoranordnungen die Streustrahlung aus zwei nicht identischen Abschnitten des Primärstrahls in zwei verschiedenen Spektralbereichen gemessen wird und daß aus den dabei gewonnenen Meßwerten die Fotoabsorption nach der Beziehung

$$A_p = | d1 * (\ln Q1 - b1) - d2 * (\ln Q2 - b2) | \qquad (1)$$

bestimmt wird, wobei d1, d2, b1, b2 Konstanten sind und Q1 der Quotient der Meßwerte der ersten Detektoranordnung für den ersten und den zweiten Spektralbereich und Q2 der Quotient der Meßwerte der zweiten Detektoranordnung für den ersten und den zweiten Spektralbereich ist.

Die Erfindung basiert auf folgender Überlegung. Die Intensität der von einer der beiden Detektoranordnungen erfaßten Streustrahlung hängt außer von der Elektronendichte und dem Streuquerschnitt in dem Abschnitt des Primärstrahls, dessen Streustrahlung von der betreffenden Detektoranordnung erfaßt wird, auch von der Schwächung ab, die die Röntgenstrahlung auf ihrem Weg vom Eintritt in den Körper bis zu dem betreffenden Abschnitt und von diesem (als Streustrahlung) zur Detektoranordnung erfährt. Diese Schwächung der Röntgenstrahlung kommt einerseits durch ihre Streuung und andererseits durch ihre Absorption zustande, d.h. die Schwächung der Strahlung besteht aus einem Streuanteil und einem Absorptionsanteil. Der Streuanteil ist im wesentlichen unabhängig von der Energie der Röntgenstrahlung bzw. von dem Spektralbereich, während der Absorptionsanteil, der durch Fotoabsorption zustande kommt, stark von der Energie abhängt (er ist der dritten Potenz der Energie umgekehrt proportional). Der Streuanteil der Schwächung ist in den beiden sich in den verschiedenen Spektralbereichen ergebenden Meßwerten einer Detektoranordnung gleich groß. Deswegen und wegen des exponentiellen Zusammenhanges zwischen der Intensität der Streustrahlung und der Schwächung wird der Streuanteil eliminiert, wenn der Logarithmus der beiden Meßwerte gebildet wird. Dieser hängt daher im wesentlichen nur noch von der Fotoabsorption längs des Weges ab, den die Primärstrahlung bzw. der Streustrahl durch den Körper zurückgelegt hat.

Das gleiche gilt für den Logarithmus des Quotienten der beiden Meßwerte der anderen Detektoranordnung. Da die Streustrahlen bei geeigneter Lage der Detektoranordnungen praktisch den gleichen Weg durch den Körper zurücklegen, unterscheiden sich die beiden Wege im wesentlichen nur durch den Bereich des Primärstrahls, der zwischen den beiden Abschnitten liegt, deren Streustrahlung von den Detektoranordnungen erfaßt wird. Die Differenz der beiden genannten Logarithmen ist daher ein Maß für die Fotoabsorption in diesem Bereich.

Die Anordnung zur Durchführung des Verfahrens ist gekennzeichnet durch eine Röntgenröhre zur Erzeugung eines Röntgenstrahlenbündels, eine erste Blendenanordnung zur Ausblendung eines Primärstrahls, zwei Detektoranordnungen, die mittels einer zweiten Blendenanordnung die Streustrahlung aus zwei Abschnitten des Primärstrahls erfassen und die so angeordnet sind, daß sie auf nahezu denselben Wegen von der Röntgenstrahlung erreicht werden, und durch eine Recheneinrichtung zur Ermittlung der Fotoschwächung aus den Meßwerten.

Es gibt verschiedene Möglichkeiten in zwei Spektralbereichen zu messen. Eine Möglichkeit besteht darin, nacheinander zwei Messungen mit einem unterschiedlichen Spektrum des Primärstrahls durchzuführen. Dies kann nach einer Weiterbildung dadurch erfolgen, daß die Röntgenröhre an einen Hochspannungserzeuger mit umschaltbarer Hochspannung angeschlossen ist. Bekanntlich hängt das Bremsstrahlungsspektrum, das in einer Röntgenröhre erzeugt wird, von der Hochspannung an der Röntgenröhre ab. Durch Änderung dieser Hochspannung wird also auch das Spektrum geändert.

Im zuvor beschriebenen Fall wird das Energiespektrum der Röntgenröhre selbst zwischen den beiden Messungen geändert. Es ist aber auch möglich, dieses Energiespektrum unverändert zu lassen und ein umschaltbares Filter vor dem Untersuchungsbereich anzuordnen, das die Röntgenstrahlung in den beiden Umschaltstellungen des Filters in unterschiedlicher Weise aufhärtet, so daß zwei verschiedene Energiespektren entstehen. In diesem Fall haben jedoch beide Spektralbereiche die gleiche obere Grenzenergie, die durch die Röhrenspannung definiert ist. Die Spektren unterscheiden sich daher nicht so stark voneinander wie bei der zuvor genannten Ausbildung.

Eine weitere Möglichkeit zur Erzeugung von Streustrahlenmeßwerten in zwei verschiedenen Spektralbereichen besteht nach einer Weiterbildung der Erfindung darin, daß jede Detektoranordnung einen Detektor enthält, der die Streustrahlung in zwei unterschiedlichen Spektralbereichen in je ein elektrisches Signal umsetzt. Hierbei wird also das Energiespektrum im Primärstrahl ganz unverändert gelassen, jedoch liefert der Detektor - ein sogenannter Split-Detektor - zwei elektrische Signale, die der Intensität der Streustrahlung in zwei verschiedenen Spektralbereichen entsprechen. Gegenüber der erstgenannten Ausbildung steht dem Vorteil, daß nur eine Messung durchgeführt werden muß, der Nachteil gegenüber, daß für jedes der beiden Signale, die eine Detektoranordnung liefert, je ein Verarbeitungskanal vorhanden sein muß (Vorverstärker usw.).

Die Erfindung erfordert nicht den Einsatz einer monochromatischen Strahlenquelle zur Erzeugung des Primärstrahls. Daher kann eine Röntgenröhre verwendet werden, die ein Bremsstrahlungsspektrum mit sehr hoher Intensität liefert, wodurch sich kurze Meßzeiten ergeben. Eine Verkürzung der Meßzeit resultiert auch daraus, daß die Energie der Röntgenquanten nicht gemessen werden muß und daß die elastisch gestreute Strahlung nicht getrennt erfaßt werden muß.

Die Erfindung wird nachstehend anhand der Zeichnung näher erläutert. Es zeigen:

Fig. 1    eine schematische Darstellung eines Ausführungsbeispiels der Erfindung,

Fig. 2    eine besondere Ausführungsform einer Detektoranordnung.

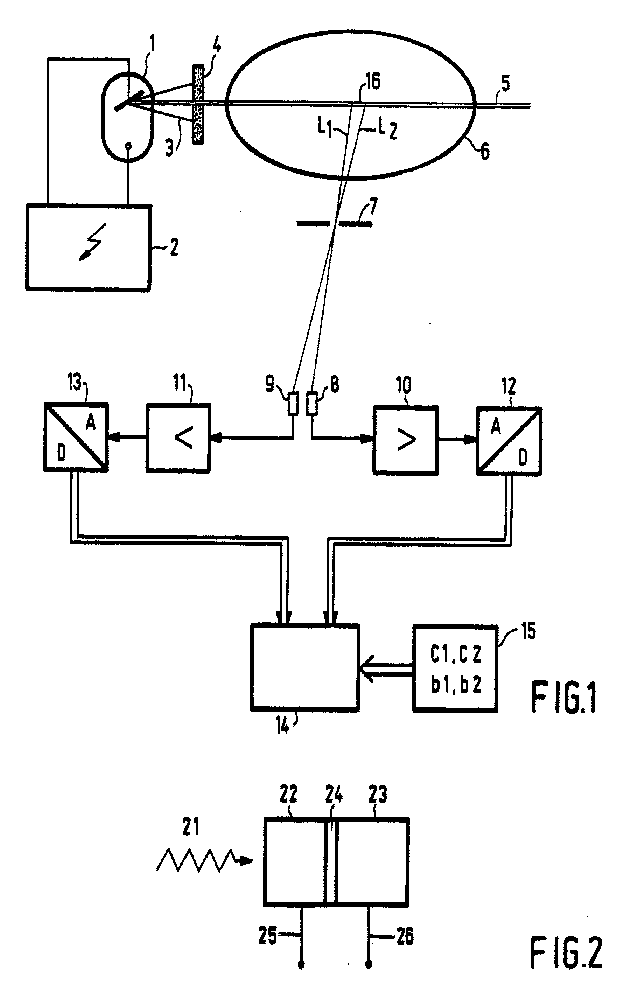

In Fig. 1 ist mit 1 eine Röntgenröhre bezeichnet, die an einen Hochspannungserzeuger 2 angeschlossen ist, der auf zwei verschiedene Hochspannungen, z.B. 100 kV und 160 kV umschaltbar ist. Aus dem von der Röntgenröhre emittierten Röntgenstrahlenbündel 3 wird mit Hilfe einer ersten Blendenanordnung 4 ein dünner Primärstrahl 5 (pencil-beam) erzeugt, d.h. ein Strahl, der senkrecht zu seiner Ausbreitungsrichtung nur eine geringe Ausdehnung (z.B. 2 mm x 2 mm) aufweist. Der Primärstrahl durchsetzt einen Untersuchungskörper 6 und erzeugt in diesem Streustrahlung. Ein Teil der Streustrahlung, die unter einem Winkel von mehr als 90° (bezogen auf die Ausbreitungsrichtung des Strahls) aus dem Untersuchungskörper austritt, erreicht durch eine zweite Blendenanordnung 7 mit einer in Ausbreitungsrichtung des Primärstrahls kleinen Öffnung zwei Detektoren 8 und 9, die dicht nebeneinander angeordnet sind.

Jeder der beiden Detektoren 8 und 9 "sieht" durch die Öffnung in der Blende hindurch einen bestimmten vergleichsweise kurzen, annähernd punktförmigen Abschnitt des Primärstrahls, d.h. er erfaßt die in diesem Abschnitt des Primärstrahls erzeugte und in Richtung der Verbindungslinien L1 bzw. L2 mit den Detektoren 8 bzw. 9 verlaufende Streustrahlung. Die Ausgangssignale der Detektoren 8 bzw. 9 werden über einen Vorverstärker 10 bzw. 11 und einen Digital-Analog-Wandler 12 bzw. 13 einer Recheneinrichtung 14 zugeführt. Zur Bestimmung der Fotoabsorption in dem Bereich 16 des Primärstrahls, der sich zwischen den Abschnitten befindet, deren Streustrahlung von den Detektoren 8 und 9 erfaßt wird, erfolgt eine erste Messung bei einer Röhrenspannung von 100 kV und eine zweite Messung bei einer Röhrenspannung von 160 kV. Die beiden Meßwerte, die jeder der Detektoren 8 und 9 dabei liefert, werden in der Recheneinrichtung 14 unter Heranziehung der in einem Speicher 15 gespeicherten Konstanten c1, c2, b1, b2 verarbeitet. Diese Verarbeitung basiert auf folgenden Überlegungen.

Die Schwächung, die die Röntgenstrahlung auf ihrem Weg durch den Untersuchungskörper bis zu einem der Detektoren erfährt, hängt exponentiell vom Integral des Schwächungskoeffizienten längs des zurückgelegten Weges ab. Demnach gilt für das Signal S11, das der Detektor 8 im ersten Spektralbereich E1 erzeugt, die Beziehung

$$S11 = c11 * \exp\left(-\int_{L1} u(x,E1)dx\right) \qquad (2)$$

Dabei ist c11 eine Proportionalitätskonstante die solche Faktoren wie Meßzeit und Detektorempfindlichkeit berücksichtigt und u(x,E1) der vom Ort x und der Energie E1 abhängige Schwächungskoeffizient. Entsprechend findet man für das Signal S12, das der gleiche Detektor für das zweite Röntgenspektrum E2 erzeugt

$$S12 = c12 * \exp\left(-\int_{L1} u(x,E2)dx\right) \qquad (3)$$

Setzt man den Quotienten S11/S12 = Q1 und logarithmiert diesen, so ergibt sich mit den Gleichungen (2) und (3)

$$\ln Q1 = \int_{L1} (u(x,E2) - u(x,E1)dx + b1 \qquad (4),$$

wo b1 = ln [c11/c12]

Der Schwächungskoeffizient u läßt sich bekanntlich in einen Absorptionskoeffizienten und einen Streukoeffizienten zerlegen, die sich wiederum in einen nur energieabhängigen Term und einen nur ortsabhängigen Term aufspalten lassen, so daß die Beziehung gilt

$$u(x,E) = a_c(x) * f_c(E) + a_p(x) * f_p(E) \qquad (5)$$

Dabei ist $a_c(x)$ ein nur vom Ort x bzw. nur von der Streudichte an diesem Ort abhängigen Koeffizient, während $f_c(E)$ ein Faktor ist, der die Energieabhängigkeit der Streuung beschreibt. $a_p(x)$ bezeichnet den energieunabhängigen, nur vom Ort abhängenden Fotoabsorptionskoeffizienten und $f_p(E)$ beschreibt die Energieabhängigkeit der Fotoabsorption. Wenn die beiden Spannungen, bei denen der Röntgenstrahler 1 betrieben wird, zwischen ..80 kV und ..50 kV liegen, hängt die Streuung praktisch nicht von der Energie ab, d.h. $f_c(E)$ ist eine Konstante. Hingegen hängt die Fotoschwächung starkt von der Energie ab; sie ist bekanntlich umgekehrt proportional zur dritten Potenz der Energie. Berücksichtigt man, daß $f_c(E)$ praktisch eine Konstante ist, dann ergibt sich durch Einsetzen von Gleichung (5) in Gleichung (4)

$$\ln Q1 = \int_{L1} a_p(x) * (f_p(E2) - f_p(E1))dx + b1 \qquad (6)$$

Diese läßt sich umformen in

$$A_p(L1) = \int_{L1} a_p(x)dx = \left[ d1 * \ln Q1 - b1 \right] \tag{7}$$

$$d1 = 1/f_p(E2) - f_p(E1);$$

$A_p(L1)$ stellt die Fotoabsorption längs des Weges L1 dar. Die Konstanten d1 und b1 lassen sich auf folgende Weise bestimmen:

Der Untersuchungskörper 6 wird durch einen homogenen Kalibrierkörper mit definierter Geometrie und bekanntem Fotoabsorptionskoeffizienten $a_p$ ersetzt, so daß aufgrund des vorgegebenen Weges L1, den die Streustrahlung durch diesen Kalibrierkörper nimmt, die Fotoabsorption errechnet werden kann. Dann werden bei zwei verschiedenen Röntgenröhrenspannungen die Signale S11 und S12 gemessen und daraus der Quotient Q1 gebildet. Anschließend wird mit einem zweiten ebenfalls homogenen Kalibrierkörper mit derselben Geometrie, jedoch mit wesentlich abweichender, ebenfalls bekannter Fotoabsorption der beschriebene Meßvorgang wiederholt. Setzt man die bei den beiden Messungen mit jedem der beiden Kalibrierkörper gefundenen Werte bzw. die errechneten Werte in die Gleichung (7) ein, dann erhält man zwei Gleichungen zur Bestimmung der Unbekannten d1, b1. Vorzugsweise wird der geschilderte Meßvorgang noch mit weiteren Kalibrierkörpern wiederholt, um den Einfluß von Meßungenauigkeiten usw. zu verringern. Die so gefundenen Werte d1, b1 hängen nur von der Spektralverteilung der Energie im Primärstrahl, d.h. von der Spannung an der Röntgenröhre, sowie von der Geometrie der Meßanordnung ab. Führt man daher die späteren Messungen zur Bestimmung der Fotoschwächung bei denselben Röhrenspannungen aus bzw. bei der gleichen Lage der Detektoren 8 und 9 und der Blende 7 in bezug auf den Primärstrahl 5, ändern sich diese Werte nicht.

Auf ähnliche Weise läßt sich für den zweiten Fotodetektor 9 für die Fotoschwächung auf dem diesen Detektor zugeordneten Weg L2 die Fotoschwächung gemäß Gleichung (8)

$$A_p(L2) = \int_{L2} a_p(x)dx = d2 * \left[ \ln Q2 - b2 \right] \tag{8}$$

ermitteln. Dabei ist Q2 der Quotient der von diesem Detektor bei den Energien E1 und E2 gemessenen Meßwerte und d2 und b2 sind Konstanten, die jedoch nicht zwangsläufig mit d1 und b1 identisch sind. Unterschiede in b1 und b2 resultieren aus möglichen Unterschieden in den Empfindlichkeiten der Detektoren, d1 und d2 hängen von der Bremsstrahl-Spektralverteilung bei E1 und E2 ab und sind nicht genau identisch aufgrund der Tatsache, daß die durch den Compton-Streuvorgang bewirkte Änderung der Energie der Röntgenquanten zu leicht unterschiedlicher Fotoschwächung bei den Detektoren 1 und 2 führt.

Wenn die Detektoren 8 und 9 sowie die Abschnitte auf dem Primärstrahl, deren Streustrahlung sie erfassen, dicht beieinander liegen, sind die Wege, die die Streustrahlung vom Primärstrahl 5 durch den Untersuchungskörper 6 zu den Detektoren 8 und 9 zurücklegen, einander sehr eng benachbart. Aus diesem Grund erfahren die Streustrahlen praktisch die gleiche Fotoabsorption. Auch die Fotoabsorption, die die Röntgenstrahlung auf dem Wege zu dem vom Detektor 8 erfaßten ersten Abschnitt auf dem Primärstrahl zurücklegt, ist für beide Wege L1 und L2 gleich. Somit unterscheiden sich die beiden Wege L1 und L2 lediglich um die Strecke 16, die der Primärstrahl 5 durchlaufen muß, um von dem vom Detektor 8 erfaßten Abschnitt auf dem Primärstrahl zu dem vom Detektor 9 erfaßten Abschnitt zu gelangen. Die Differenz $A_p$ zwischen der Fotoschwächung längs des Weges L1 und der Fotoschwächung längs des Weges L2 gemäß den Gleichungen (7) und (8) repräsentiert also die Fotoschwächung im Bereich 16 auf dem Primärstrahl. Unter Verwendung der Gleichungen (7) und (8) läßt sich diese Schwächung nach der Formel

$$A_p = \left| d1 * \left[ \ln Q1 - b1 \right] - d2 * \left[ \ln Q2 - b2 \right] \right| \tag{9}$$

bestimmen. $A_p$ ist eine von der Energie unabhängige Materialkonstante.

Die Berechnung der Fotoschwächung $A_p$ im Bereich 16 erfolgt in der Recheneinrichtung 14 aufgrund der gemessenen Werte, aus denen die Quotienten Q1 und Q2 gebildet werden, sowie aus den im Speicher 15 gespeicherten Konstanten gemäß Gleichung (9).

Bei der in Fig. 1 dargestellten Anordnung ist es erforderlich, die Röntgenröhrenspannung umzuschalten, um nacheinander von jedem Detektor zwei Meßwerte für unterschiedliche Spektralbereiche zu erhalten.

Stattdessen ist es aber auch möglich, mit nur einer Messung (bei einer einzigen Röhrenspannung) auszukommen, wenn die Detektoren 8 bzw. 9 jeweils durch die in Fig. 2 dargestellte Detektoranordnung ersetzt werden. Diese Detektoranordnung besteht aus zwei Abschnitten 22 und 23, die in Richtung der zu detektierenden Streustrahlung 21 gesehen hintereinander angeordnet sind. Zweckmäßig sind die beiden Abschnitte 22 und 23 durch eine die Röntgenstrahlung aufhärtende Schicht 24 getrennt. Der zuerst von Streustrahlung getroffene Abschnitt 22 ist so ausgebildet, daß er im wesentlichen nur den längerwelligen Teil des Streustrahlenspektrums in ein elektrisches Signal umsetzt, das an dem Detektorausgang 25 erscheint. Der verbleibende, gegebenenfalls durch die Schicht 24 noch aufgehärtete Teil des Streustrahlenspektrums wird von dem Abschnitt 23 am Ausgang 26 in ein elektrisches Signal umgesetzt. Auf diese Weise ist der dargestellte sogenannte Split-Detektor in der Lage, der Intensität der Streustrahlung in zwei verschiedenen Spektralbereichen entsprechende Signale zu liefern. Dem Vorteil, daß bei Verwendung derartiger Detektoren nur eine Messung erforderlich ist, steht der Nachteil gegenüber, daß statt zweier Kanäle (10, 12 bzw. 11, 13) zur Verarbeitung der Meßwerte deren vier erforderlich sind.

## Patentansprüche

1. Verfahren zur Bestimmung der Fotoschwächung in einem von einem Primärstrahl durchsetzten Bereich eines Untersuchungskörpers, wobei die im Primärstrahlbereich erzeugte Streustrahlung gemessen und aus den Meßwerten die Fotoschwächung bestimmt wird,
dadurch gekennzeichnet, daß mit zwei Detektoranordnungen die Streustrahlung aus zwei nicht identischen Abschnitten des Primärstrahls in zwei verschiedenen Spektralbereichen gemessen wird und daß aus den dabei gewonnenen Meßwerten die Fotoabsorption nach der Beziehung

$$A_p = |\, d1 * [\ln Q1 - b1] - d2 * [\ln Q2 - b2]\,|$$

bestimmt wird, wobei d1, d2, b1, b2 Konstanten sind und Q1 der Quotient der Meßwerte der ersten Detektoranordnung für den ersten und den zweiten Spektralbereich und Q2 der Quotient der Meßwerte der zweiten Detektoranordnung für den ersten und den zweiten Spektralbereich.

2. Verfahren nach Anspruch 1,
dadurch gekennzeichnet, daß der Primärstrahl mittels einer Röntgenröhre erzeugt wird, die bei einer ersten Messung mit einer ersten Röhrenspannung und bei einer zweiten Messung mit einer zweiten, von der ersten deutlich abweichenden Röhrenspannung betrieben wird.

3. Anordnung zur Durchführung des Verfahrens nach Anspruch 1,
gekennzeichnet durch eine Röntgenröhre (1) zur Erzeugung eines Röntgenstrahlenbündels (3), eine erste Blendenanordnung (4) zur Ausblendung eines Primärstrahls (5), zwei Detektoranordnungen (8, 9), die mittels einer zweiten Blendenanordnung (7) die Streustrahlung aus zwei Abschnitten des Primärstrahls erfassen und die so angeordnet sind, daß sie auf nahezu denselben Wegen von der Streustrahlung erreicht werden, und durch eine Recheneinrichtung (14, 15) zur Ermittlung der Fotoschwächung aus den Meßwerten beider Detektoren (8, 9) nach der Beziehung des Anspruchs 1.

4. Anordnung nach Anspruch 2 und 3,
dadurch gekennzeichnet, daß die Röntgenröhre (1) an einen Hochspannungserzeuger (2) mit umschaltbarer Hochspannung angeschlossen ist.

5. Anordnung nach Anspruch 3,
dadurch gekennzeichnet, daß jede Detektoranordnung einen Detektor enthält, der die Streustrahlung in zwei unterschiedlichen Spektralbereichen in je ein elektrisches Signal umsetzt.

## Claims

EP 0 217 464 B1

1. A method for determining the photoattenuation in a domain of a test object traversed by a primary beam, the scattered radiation generated in the domain of the primary beam being measured on the photoattenuation being determined from the measured values,
characterized in that the scattered radiation from two non-identical sections of the primary beam is measured in two different spectral ranges by two detector configurations, the photoabsorption being determined from the measured values thus obtained in accordance with the relation

$$A_p = |\, d1 \,^* (\ln Q1 - b1) - d2 \,^* (\ln Q2 - b2)\,|$$

where d1, d2, b1 and b2 are constants and Q1 is the quotient of the measured values from the first detector configuration for the first and the second spectral range and Q2 is the quotient of the measured values from the second detector configuration for the first and the second spectral range.

2. A method as claimed in Claim 1,
characterized in that the primary beam is generated by means of an X-ray tube which is operated with a first tube voltage for a first measurement and for a second measurement with a second tube voltage which clearly differs from the first tube voltage.

3. An arrangement for carrying out the method claimed in Claim 1,
characterized in that there are provided an X-ray tube (1) for generating an X-ray beam (3), a first diaphragm arrangement (4) for forming a primary beam (5), two detector configurations (8, 9) which detect the scattered radiation from two sections of the primary beam by means of a second diaphragm arrangement (7) and which are arranged so that they are reached by the scattered radiation along practically the same paths, and a computing device (14, 15) for determining the photoattenuation from the measured values from the two detectors (8, 9) according to the relation of Claim 1.

4. An arrangement as claimed in the Claims 2 and 3,
characterized in that the X-ray tube (1) is connected to a high-voltage generator (2) whose high voltage can be switched over.

5. An arrangement as claimed in Claim 3,
characterized in that each detector configuration includes a detector converts the scattered radiation in two different spectral ranges into a respective electrical signal.

## Revendications

1. Procédé pour déterminer l'atténuation photonique dans un domaine d'un corps examiné qui est traversé par un rayonnement primaire, dans lequel le rayonnement diffusé produit dans le domaine du rayonnement primaire est mesuré et l'atténuation photonique est déterminée à partir des valeurs de mesure, caractérisé en ce qu'à l'aide de deux dispositifs détecteurs, le rayonnement diffusé provenant de deux sections non identiques du rayonnement primaire est mesuré dans deux domaines spectraux différents, et qu'à partir des valeurs de mesure ainsi obtenues, l'absorption photonique est déterminée selon la relation :

$$A_p = |\, d1 \,^* (\ln Q1 - b1) - d2 \,^* (\ln Q2 - b2)\,|$$

où d1, d2, b1, b2 sont des constantes et Q1 est le quotient des valeurs de mesure du premier dispositif détecteur pour le premier et le second domaine spectral et Q2 est le quotient des valeurs de mesure du second dispositif détecteur pour le premier et le second domaine spectral.

2. Procédé suivant la revendication 1, caractérisé en ce que le rayonnement primaire est produit à l'aide d'un tube à rayons X qui est mis en oeuvre, pour une première mesure, à une première tension de tube et, pour une seconde mesure, à une seconde tension de tube nettement différente de la première.

3. Montage servant à exécuter le procédé suivant la revendication 1, caractérisé par un tube à rayons X (1) destiné à produire un faisceau de rayons X (3), un premier dispositif à diaphragme (4) pour diaphragmer un rayonnement primaire (5), deux dispositifs détecteurs (8, 9) qui détectent, à l'aide d'un deuxième dispositif à diaphragme (7), le rayonnement diffusé provenant de deux sections du rayonne-

7

ment primaire et qui sont disposés d'une façon telle qu'ils soient atteints par le rayonnement diffusé sur des trajets à peu près identiques, ainsi que par un dispositif de calcul (14, 15) servant à déterminer l'atténuation photonique à partir des valeurs de mesure des deux détecteurs (8, 9) selon l'équation indiquée dans la revendication 1.

4. Montage suivant les revendications 2 et 3, caractérisé en ce que le tube à rayons X (1) est connecté à un générateur de haute tension (2) à haute tension commutable.

5. Montage suivant la revendication 3, caractérisé en ce que chaque dispositif détecteur contient un détecteur qui convertit les rayonnements diffusés de deux domaines spectraux différents chaque fois en un signal électrique.

FIG.1

FIG.2